# EUROPEAN PATENT APPLICATION

(11) **EP 4 825 555 A1**
(43) Date of publication of application: **21.10.2026**
(21) Application number: 25171384.8
(22) Date of filing: 17.04.2025
(51) Int. Cl.: B28C 7/04, B28B 1/00, B28C 7/02, B33Y 50/02, B33Y 30/00, B33Y 10/00

(54) **METHOD FOR CONTROLLING PROPERTIES OF A FLOWABLE CONSTRUCTION MATERIAL AND SYSTEM FOR ADDITIVE MANUFACTURING**

(71) Applicant: Holcim Technology Ltd., 6300 Zug (CH)
(72) Inventor: PERAUD, Mickaël, 38070 Saint Quentin Fallavier (FR); SANDRA, Fabien, 38070 Saint Quentin Fallavier (FR); JAILLET, Cédric, 38070 Saint Quentin Fallavier (FR)
(74) Representative: SONN Patentanwälte GmbH & Co KG

(57) **Abstract**

A method for controlling properties of a flowable construction material, such as concrete, preferably during additive manufacturing, employs simultaneous monitoring of moisture content and power consumption during mixing. Benchmark ranges comprising target ranges for moisture content and power consumption are established for the material based on desired properties. During mixing of aggregates, hydraulic binder, water and admixtures, a moisture sensor (6) monitors the moisture content while a wattmeter (8) monitors the power consumption of the mixing device (1). The monitored values are compared to their respective benchmark ranges. Based on this comparison, the amount of water and/or admixture added to the material is adjusted to maintain desired properties.

## Description

The invention refers to a method for controlling properties of a flowable construction material, preferably during additive manufacturing. Further, the invention refers to a system for additive manufacturing.

Additive manufacturing using cementitious materials, commonly known as 3D concrete printing, has emerged as a promising technology in the construction industry. This technology requires precise control of material properties to ensure consistent printability and final product quality. The flowable construction materials used in such processes, typically consisting of hydraulic binders, aggregates, water, and various admixtures, must maintain specific rheological properties throughout the printing process.

In conventional concrete mixing processes, the moisture content of aggregates is typically measured before mixing, and water content is adjusted based on predetermined mix designs. For 3D printing applications, however, this approach is insufficient as the rheological properties of the material must be more precisely controlled to ensure proper extrusion and layer adhesion.

Current methods for monitoring concrete properties during mixing primarily rely on power consumption measurements using wattmeters. These devices measure the energy required to mix the material, which serves as an indirect indicator of material viscosity. However, wattmeter measurements alone have several limitations.

First, the self-heating of mixing equipment can lead to deviations in wattmeter measurements, resulting in unreliable viscosity determinations. Second, when aggregates become trapped under mixer blades, they can cause artificial increases in power consumption readings that do not accurately reflect material properties. Third, the presence of fibers, which are commonly used in 3D printing materials, can interfere with wattmeter readings. Fourth, variations in production volume and mixing speed can affect measurement accuracy since wattmeter calibration is dependent on these parameters.

Furthermore, for materials with low viscosity or when working with large volumes, wattmeters may not provide sufficient sensitivity to detect meaningful changes in material properties. This is particularly problematic in 3D printing applications where precise control of material properties is crucial for successful printing operations.

Some attempts have been made to use moisture sensors in conventional concrete production, particularly for measuring aggregate moisture content on conveyor belts. However, these systems are generally designed for traditional concrete applications and have not been successfully adapted for the more demanding requirements of 3D printing materials.

A particularly challenging aspect in controlling the properties of 3D printing materials is determining the appropriate corrective action when deviations from target properties are detected. When material viscosity is too high, for example, it may be unclear whether to add water or a plasticizer to adjust the properties. Adding water will reduce viscosity but also affects the water-to-cement ratio, potentially compromising strength properties. Adding a plasticizer can achieve similar rheological modifications while maintaining the water-to-cement ratio, but may have different effects on setting time and other properties.

Current systems, relying solely on wattmeter measurements, cannot differentiate between viscosity changes caused by variations in water content versus those resulting from other factors. This makes it impossible to determine whether deviations from desired properties should be corrected by adding water or chemical admixtures. As a result, operators must rely on experience and trial-and-error approaches, leading to inconsistent results and potential waste of materials.

Moreover, in cases where both water content and plasticizer levels deviate from optimal values, existing systems provide no guidance on the appropriate combination or sequence of corrective actions. This limitation becomes particularly problematic in automated production environments where real-time decisions about material adjustments must be made without human intervention.

A primary object of the present invention is to provide an improved method and system for monitoring and controlling the properties of flowable construction materials during mixing and 3D printing processes.

Another object of the invention is to provide a more reliable and accurate means of determining material moisture content in real-time during the mixing process.

A further object of the invention is to enable precise adjustment of material properties while maintaining critical parameters such as water-to-cement ratio within acceptable ranges.

Yet another object of the invention is to provide a system that can effectively monitor and control material properties even in the presence of fibers or other additives that may interfere with conventional monitoring methods.

A still further object of the invention is to reduce mixing time while ensuring consistent material properties, thereby increasing production efficiency while maintaining quality standards.

Another object of the invention is to provide a system that can automatically adjust material composition in response to detected variations in properties, ensuring consistent printability throughout the manufacturing process.

An additional object of the invention is to provide a system capable of determining appropriate corrective actions by distinguishing between different causes of property variations, thereby enabling informed decisions about whether to adjust water content, admixture content, or both.

In order to solve these and other objects, the present invention provides a method for controlling properties of a flowable construction material, preferably during additive manufacturing, the method comprising:
establishing benchmark ranges comprising a target moisture content range and a target power consumption range for the flowable construction material having desired properties,
mixing aggregates, a hydraulic binder, water, and at least one admixture to form the flowable construction material,
monitoring, during mixing, a moisture content of the flowable construction material, preferably using a microwave moisture sensor,
monitoring, during mixing, a power consumption of a mixing device used for the mixing using a wattmeter,
comparing the monitored moisture content and power consumption to the respective benchmark ranges, and
adjusting, based on the comparing, an amount of at least one of water and admixture added to the flowable construction material to maintain the desired properties of the flowable construction material.

According to the invention, benchmark ranges comprising a target moisture content range and a target power consumption range are first established for the flowable construction material having desired properties. These benchmark ranges may preferably be determined through testing of reference mixtures that exhibit optimal printing characteristics. The ranges account for acceptable variations in properties while maintaining proper performance.

During production, aggregates, a hydraulic binder, water, and at least one admixture are mixed to form the flowable construction material. While mixing occurs, two key parameters are simultaneously monitored: the moisture content of the material (using a moisture sensor, such as a microwave moisture sensor) and the power consumption of the mixing device (using a wattmeter). Preferably, monitoring the moisture content and power consumption is carried out continuously during the mixing. The moisture sensor provides direct measurement of water content, while the wattmeter provides indirect measurement of material viscosity through power consumption monitoring.

By comparing both the monitored moisture content and power consumption to their respective benchmark ranges, the system can make informed decisions about necessary adjustments. This dual-parameter monitoring approach provides several technical advantages.

The system can distinguish between different causes of property variations. For example, if power consumption increases (indicating higher viscosity) while moisture content remains stable, this suggests the need for additional admixture rather than water. Conversely, if both moisture content and power consumption deviate from their target ranges, the system can determine whether adjustments to both water and admixture contents are needed.

Further, the method enables precise control of water-to-cement ratio while maintaining desired rheological properties. When viscosity adjustments are needed, the system can determine whether they can be achieved through admixture addition alone (preserving the water-to-cement ratio) or whether water addition is necessary and acceptable within the established moisture content range.

Further, the method is particularly effective for materials containing fibers or other additives that might interfere with wattmeter readings alone. The moisture sensor provides a reliable secondary measurement that is unaffected by these components, ensuring accurate property control even with complex mix designs.

Further, the combination of sensors compensates for factors that might affect individual measurements. For instance, mixer self-heating or aggregate accumulation might affect wattmeter readings, but these effects can be identified and accounted for by comparing power consumption data with moisture content measurements.

Further, the method enables faster mixing times since property adjustments can be made more precisely and with greater confidence. This increased efficiency can be achieved without compromising quality control, as both critical parameters (moisture content and power consumption) are continuously monitored and maintained within their target ranges.

In a preferred embodiment of the invention, the adjusting of the flowable construction material is carried out such that both the monitored moisture content and the monitored power consumption are maintained within their respective target ranges. By ensuring that both parameters remain within their target ranges simultaneously, the method achieves optimal material performance while preventing potential quality issues that might arise from compensating for one parameter at the expense of the other. For example, if viscosity is adjusted solely based on power consumption, the addition of water to reduce viscosity might push the moisture content outside its acceptable range, potentially compromising strength properties. Similarly, if only moisture content is controlled, the addition of certain admixtures might result in unacceptable changes in viscosity even while maintaining proper water content. The simultaneous control of both parameters ensures that adjustments to achieve desired rheological properties do not compromise other critical material characteristics. This is particularly important in 3D printing applications, where the material must maintain both proper extrusion characteristics (related to power consumption/viscosity) and appropriate structural properties (related to moisture content/water-to-cement ratio).

In a particularly advantageous embodiment of the invention, the mixing process follows a specific sequence that enables precise control over final material properties. The process begins by mixing the aggregates and hydraulic binder to form a mixture, followed by the addition of approximately 95% of the target water amount. This initial water addition leaves a small but critical reserve of water (approximately 5%) for fine-tuning the mixture properties. The monitoring of both moisture content and power consumption during this initial stage provides essential information about how the mixture is developing. The subsequent addition of the remaining water portion can then be precisely controlled based on the monitored parameters, allowing for fine adjustment to achieve both the target moisture content range and power consumption range. This staged approach is particularly beneficial because it prevents overshooting of desired properties, which would be difficult to correct through subsequent additions of dry materials.

In one advantageous embodiment of the invention, when the monitored moisture content is below its target range while the power consumption remains within its target range, the adjustment comprises adding an amount of water. This control response is particularly effective because it addresses the precise nature of the deviation while minimizing the risk of disrupting other material properties. When this specific combination of parameters is observed (low moisture but acceptable power consumption), it indicates that the material's water content is insufficient while its rheological properties are satisfactory. Under these conditions, the addition of water serves to bring the moisture content into its target range without significantly risking over-plasticization of the mixture.

In another advantageous embodiment, when the monitored power consumption is above its target range while the moisture content remains within its target range, the adjustment comprises adding an amount of admixture and/or water. This scenario represents a situation where the elevated power consumption indicates higher than desired viscosity, despite adequate moisture content. The ability to selectively add either admixture or water, or a combination of both, provides flexibility in addressing this condition. Adding admixture (such as a plasticizer) allows for viscosity reduction without increasing the overall water content, thereby maintaining critical water-to-cement ratios and strength properties. However, in cases where the moisture content is in the lower portion of its acceptable range, additional water might be preferred or added in combination with admixture.

According to another preferred embodiment, the mixing is performed for a duration of no more than 4 minutes. Keeping the mixing duration below 4 minutes is beneficial because it helps prevent premature hydration reactions that could affect material printability. Extended mixing times can lead to the initiation of cement hydration within the mixer, potentially resulting in inconsistent properties during the printing process. Furthermore, limiting the mixing time to 4 minutes significantly reduces the risk of air entrainment that typically occurs during prolonged mixing, thereby helping to maintain proper material density and subsequent hardened properties. The short mixing duration also contributes to increased production efficiency and throughput, enabling faster batch preparation while maintaining consistent material properties. This is particularly important in 3D printing applications where continuous material supply is crucial for successful printing operations.

Each of the target moisture content range and the target power consumption range may preferably be defined by a target value and an acceptable deviation range around the target value. Specifically, each target value represents the optimal condition where the respective material property is at its most desirable level for printing operations, while the acceptable deviation range defines the allowable variation above and below this optimal value. For example, when a moisture content target value of X% is established with an acceptable deviation range of ±Y%, the actual moisture content may vary between (X-Y)% and (X+Y)%. In a preferred embodiment, the acceptable deviation range may be ±1% to ±5%.

In a preferred embodiment, the method further comprises determining whether the monitored moisture content and power consumption fall within acceptable deviation ranges from the respective benchmark ranges, wherein the acceptable deviation range for moisture content preferably is ±2% and the acceptable deviation range for power consumption preferably is ±5%. The narrower ±2% range for moisture content is chosen to ensure that water-to-cement ratio variations remain within limits that maintain proper strength development and setting characteristics of the printed material. This tight moisture control prevents issues such as excessive bleeding or insufficient hydration that could compromise structural integrity. The somewhat wider ±5% tolerance for power consumption acknowledges the greater natural variability in viscosity measurements while still maintaining sufficient control to ensure proper material flow and layer adhesion during printing.

In all embodiment described above, the at least one admixture preferably comprises a plasticizer, particularly a high-range water-reducing admixture (also known as a superplasticizer). Plasticizers play an important role in achieving and maintaining desired material properties for 3D printing applications while enabling efficient property control through the monitoring and adjustment method of the invention. These admixtures operate by reducing inter-particle forces between cement particles, thereby decreasing the yield stress and plastic viscosity of the material without requiring additional water.

Suitable plasticizers for use in the method of the invention include, but are not limited to, various types of water-reducing admixtures. Polycarboxylate ether (PCE) based superplasticizers such as Viscocrete 510P have been found to be particularly effective due to their high water-reduction capability and good workability retention. Other suitable plasticizers include modified lignosulfonates, sulfonated naphthalene formaldehyde condensates (SNF), and sulfonated melamine formaldehyde condensates (SMF). Cellulose-based admixtures can be used alone or in combination with the above plasticizers to enhance stability and water retention. In exemplary implementations, the plasticizer dosage typically ranges from 0.2% to 2% by weight of the hydraulic binder, with the specific dosage being adjusted based on the monitored power consumption and moisture content values to maintain both parameters within their target ranges.

With regard to the benchmark ranges, these are preferably established **by:**
preparing a reference batch of the flowable construction material having the desired properties;
measuring a reference moisture content and a reference power consumption of the reference batch; and
determining the target ranges based on the measured reference moisture content and reference power consumption.

By using an actual reference batch that exhibits the desired properties, the method accounts for the complex interactions between different mix components and their combined effects on material behavior. This empirical approach is particularly valuable because theoretical calculations alone cannot accurately predict the optimal moisture content and power consumption values for diverse mix designs that may contain various admixtures and fibers. The measured reference moisture content and power consumption values from a known good batch serve as reliable benchmarks that inherently account for specific characteristics of the mixing equipment, environmental conditions, and raw material properties.

Preferably, the desired properties of the flowable construction material comprise at least one of a target viscosity, a target slump, a target compressive strength and a target water-to-cement ratio.

Target viscosity refers to the material's resistance to flow under applied stress, which directly affects its extrudability and shape retention during printing. Viscosity is typically measured in Pascal-seconds (Pa·s) and must be maintained within specific ranges to ensure proper material flow through the printing system while providing adequate layer stability.

Target slump characterizes the material's workability and flow behavior under its own weight. In the context of 3D printing materials, slump measurements provide an indication of the material's ability to maintain shape after extrusion. Slump is typically measured in millimeters (mm) of vertical deformation under standardized test conditions.

Target compressive strength represents the material's ability to resist compressive loads after hardening, typically measured in Megapascals (MPa) at specific curing ages (e.g., 7 days and 28 days). This property is crucial for ensuring that printed structures meet structural requirements and building codes.

Target water-to-cement ratio (w/c ratio) is the mass ratio of water to cement in the mixture. This ratio is a fundamental parameter that influences both fresh properties (workability, viscosity) and hardened properties (strength, durability). For 3D printing applications, the w/c ratio typically needs to be more precisely controlled than in conventional concrete applications to ensure consistent printability while maintaining adequate strength development.

A hydraulic binder, as used in the context of the present invention, refers to a material that sets and hardens through chemical reactions with water. The hardening occurs through a chemical reaction called hydration, wherein the hydraulic binder forms a paste that sets and develops strength through the formation of hydrates. Suitable hydraulic binders for use in the method of the invention include, but are not limited to pure Portland Cement or blended hydraulic cements, including Portland-limestone cement, Portland-slag cement, Portland-fly ash cement, and Portland-pozzolan cement.

Supplementary Cementitious Materials (SCMs) can be used in combination with Portland cement, such as ground granulated blast furnace slag (GGBFS), fly ash (Class F or Class C), silica fume, calcined clay, and natural pozzolans. Typical proportions of supplementary cementitious materials may range from 20% to 40% of the total binder content.

According to a second aspect of the invention, a system for additive manufacturing is provided, the system comprising:
a mixing device configured to mix aggregates, a hydraulic binder, water, and at least one admixture to form a flowable construction material;
a moisture sensor, preferably a microwave moisture sensor, arranged to monitor a moisture content of the flowable construction material during mixing;
a wattmeter arranged to monitor power consumption of the mixing device during mixing;
a control unit configured to:
   receive signals from the moisture sensor and the wattmeter,
   compare the monitored moisture content and power consumption to respective predetermined target ranges, and
   generate control signals for adjusting an amount of at least one of water and admixture to be added to the flowable construction material based on the comparing; and
a dispensing system configured to add the water and/or admixture to the flowable construction material in response to the control signals from the control unit.

The system according to the second aspect of the invention provides an integrated solution for real-time monitoring and automated control of material properties during additive manufacturing processes. The integration of both a moisture sensor and a wattmeter directly into the mixing device enables continuous, simultaneous monitoring of two critical parameters without disrupting the mixing process. This dual-sensor configuration provides particularly reliable measurements because the sensors operate based on different physical principles.

The moisture sensor is preferably configured as a microwave moisture sensor. A microwave moisture sensor operates based on the interaction between microwave energy and water molecules present in the flowable construction material. The sensor functions by measuring the dielectric properties of the material, which are strongly influenced by its water content. The sensor emits low-power microwave radiation into the material being measured. Water molecules, due to their polar nature, interact strongly with the microwave field, causing changes in the electromagnetic wave's behavior. Specifically, two key parameters are measured:
- Attenuation of the microwave signal (signal damping) as it passes through the material, which increases with higher moisture content
- Phase shift of the microwave signal, which occurs due to the different dielectric properties of water compared to other material components

The sensor measures these changes in the microwave field and converts them into moisture content values through calibrated relationships.

According to a preferred embodiment of the invention, the system further comprises:
at least one pump configured to transport the water or admixture to the mixing device; and
at least one valve controlled by the control unit to regulate addition of the water or admixture.

Preferably, the system further comprises a 3D printing head connected to receive the flowable construction material from the mixing device.

### EXAMPLES

The following examples illustrate various embodiments of the invention without limiting its scope.

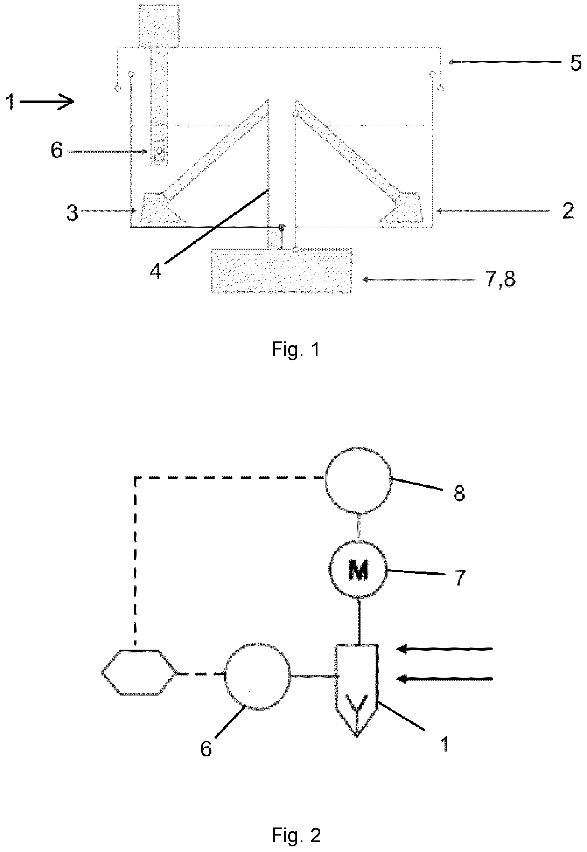

### Example 1: Mixing Device with Sensor Integration as illustrated in Fig. 1.

Figure 1 shows a schematic cross-sectional view of the mixing device 1. The device 1 comprises a mixer tank 2 with two mixer blades 3 mounted on a central shaft 4. A mixer cap 5 covers the tank 2, and the concrete level during operation is indicated by a dashed line in the figure. The moisture sensor 6 (microwave moisture sensor) is mounted to the mixer cap 5 at a position that ensures consistent contact with the mixed material during operation. The mixing shaft 4 is powered by a motor 7 equipped with an integrated wattmeter 8 for power consumption monitoring. The angled configuration of the mixer blades 3 ensures efficient mixing while enabling representative moisture measurements by preventing material accumulation around the sensor. The position of the humidity sensor 6 relative to the concrete level ensures that it remains in constant contact with the material during mixing.

### Example 2: Manual Control System as shown in Fig. 2

A system was implemented with manual addition of water and admixtures. Figure 2 shows a schematic diagram of the manual control circuit for water and admixture addition. The system comprises a mixer 1 equipped with a motor 7 connected to a wattmeter 8 for power consumption monitoring. The moisture content is monitored by a moisture sensor 6. Both the wattmeter signal and moisture signal are displayed to the operator for manual monitoring. Extra water and/or an admixture, such as a plasticizer, can be manually added to the mixer based on the monitored signals, as illustrated by the two arrows.

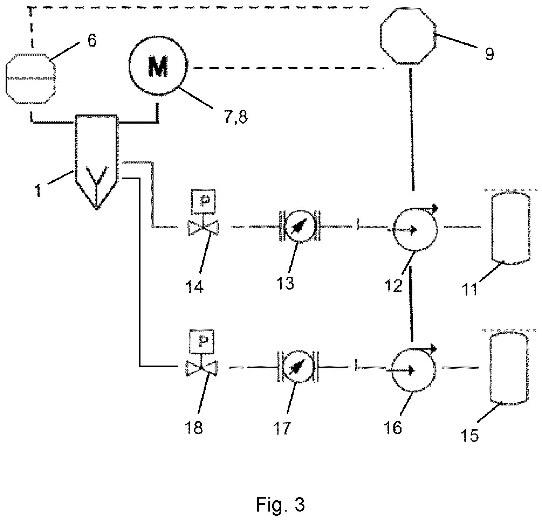

### Example 3: Automated Control System as sown in Fig. 3

Figure 3 shows a schematic diagram of the automated control circuit for water addition and admixture control. The system implements as a closed-loop control configuration. The mixer 1 is equipped with both a moisture sensor 6 and a motor 7 with a wattmeter 8. The moisture signal and wattmeter signal are transmitted to a control unit 9 that processes these inputs. Based on the processed signals, the control unit 9 automatically regulates water addition through a pilot-operated valve 10 connected to a water supply system and admixture addition through a pilot-operated valve connected to a admixture supply system.

The water supply system comprises a water tank 11, a centrifugal pump 12 for water transport, a flowmeter 13 to measure the quantity of water added, and a pilot-operated valve 14 for precise flow control. The control unit 9 receives continuous input from the moisture sensor signal, the wattmeter signal and the flowmeter reading.

The admixture supply system comprises an admixture tank 15, a centrifugal pump 16 for admixture transport, a flowmeter 17 to measure the quantity of admixture added, and a pilot-operated valve 18 for precise flow control. The control unit 9 receives continuous input from the moisture sensor signal, the wattmeter signal and the flowmeter reading.

This automated configuration enables real-time, computer-controlled adjustment of water content based on continuous monitoring of both moisture content and power consumption, without requiring manual intervention. The inclusion of a respective flowmeter 13,17 in the water supply and the admixture supply line enables precise measurement and control of water and admixture additions, while the respective pilot-operated valve 14,18 provides accurate flow control based on signals from the control unit 9.

### Example 4: Water Addition Experiments

The water addition experiments were conducted using two distinct compositions to demonstrate the responsiveness and correlation of moisture sensor and wattmeter signals. The first composition, designated as 3BM7, was a mortar incorporating polymer micro-fibers. The second composition, designated as C70, was a concrete integrating both micro and macro-fibers of polymer and metallic types.

### Results for 3BM7 Composition:

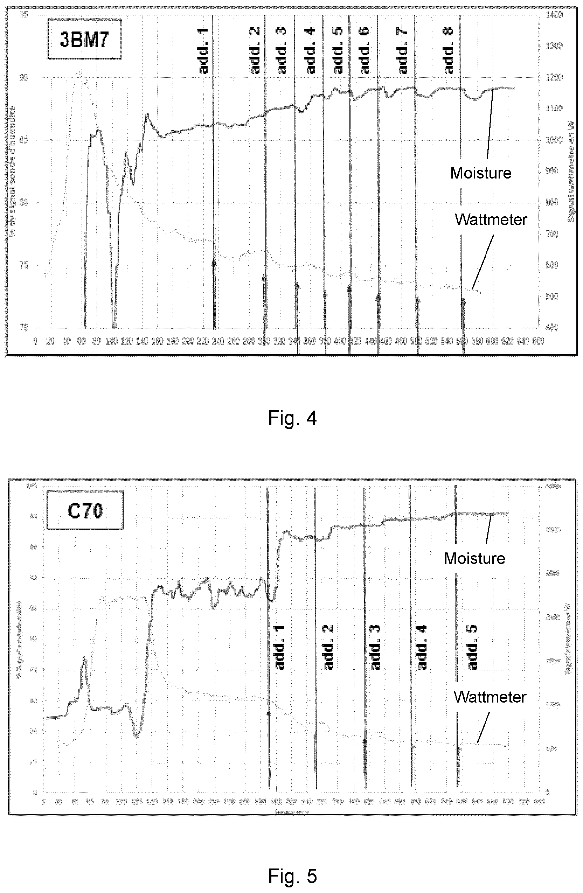

Figure 4 shows the evolution of wattmeter and moisture sensor signals during multiple water additions to the 3BM7 composition. The effects of water additions, marked as **add.** 1-8, are significantly more pronounced in the moisture sensor signal compared to the wattmeter signal. Each water addition results in an immediate, distinct response in the moisture sensor reading, while the wattmeter signal shows a more gradual, less pronounced change. This difference in response times demonstrates the superior precision of the moisture sensor in detecting water content changes. The wattmeter signal shows a general decreasing trend over time, reflecting the gradual reduction in mixing energy requirements as the material becomes more fluid.

### Results for C70 Composition:

Figure 5 presents the measurements for the C70 composition. The signals show better correlation compared to 3BM7, with both sensors responding consistently to water additions, marked as add. 1-5. The more stable signal patterns observed with C70 can be attributed to the concrete's different rheological behavior compared to the mortar composition. The presence of larger aggregates in C70 appears to result in more uniform mixing conditions and consequently more stable sensor readings.

### Correlation Analysis:

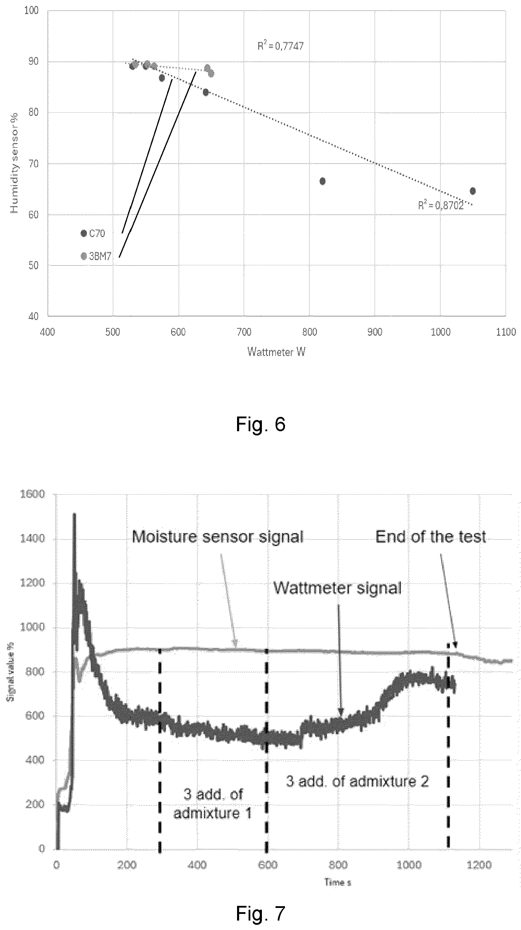

Figure 6 presents a detailed correlation analysis between wattmeter and moisture sensor signals for both compositions. The C70 composition shows a stronger correlation coefficient (R² = 0.8702) compared to 3BM7 (R² = 0.7747). This difference suggests that the relationship between moisture content and power consumption is more direct in the concrete composition than in the fiber-reinforced mortar. The difference in correlation coefficients can be attributed to the different aggregate compositions affecting material flow characteristics, the influence of fibers on power consumption measurements in 3BM7, and more uniform mixing conditions in C70 due to its composition.

### Example 5: Admixture Addition Experiments

The admixture addition experiments were designed to demonstrate the system's ability to distinguish between water and admixture effects. Two different admixtures were used while maintaining constant water content: Viscocrete 510P as a plasticizer (admixture 1) and Culminal 9108 as a cellulose-based admixture (admixture 2).

### Results for 3BM7 Composition:

Figure 7 shows the evolution of wattmeter and moisture sensor signals during sequential additions of the two admixtures to 3BM7 ink. Starting at 100% of the target water ratio, three additions of Viscocrete 510P were made during the period marked "3 add. of admixture 1," followed by three additions of Culminal 9108 during the period marked "3 add. of admixture 2." The moisture sensor signal remains remarkably stable throughout the experiment, confirming that admixture additions do not interfere with moisture measurements. The wattmeter signal shows distinct responses to admixture additions, particularly after adding Culminal 9108. The stability of the moisture signal during admixture additions demonstrates the sensor's ability to discriminate between water content changes and rheological modifications.

### Results for C70 Composition:

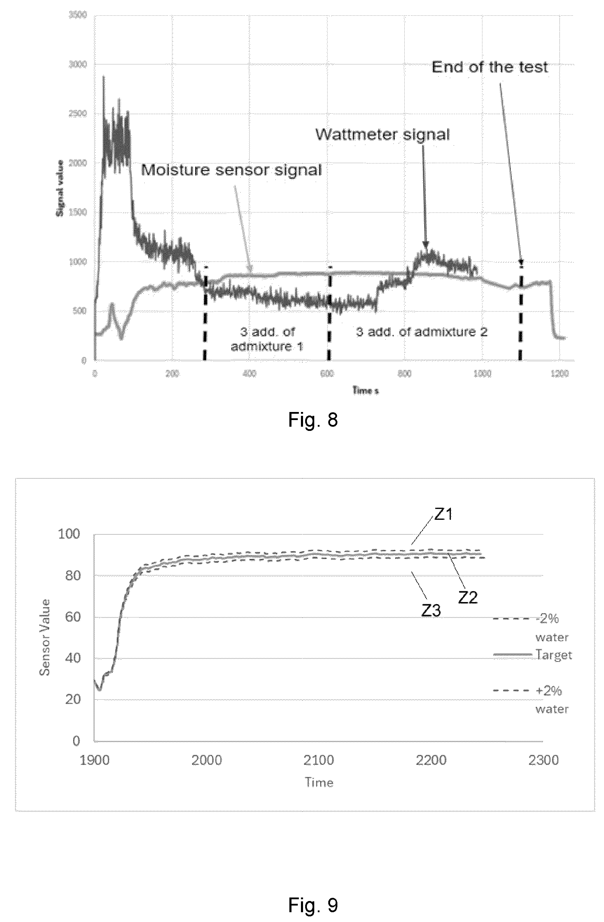

Figure 8 presents corresponding measurements for the C70 composition. The experiment followed the same protocol of three additions each of Viscocrete 510P and Culminal 9108. The moisture sensor shows slight fluctuations compared to 3BM7, attributed to the less fluid nature of C70 affecting sensor coverage. Despite these minor fluctuations, the moisture sensor signal remains significantly more stable than the wattmeter signal. The wattmeter signal shows clear responses to both admixtures, with distinct patterns for each admixture type. The difference in signal patterns between C70 and 3BM7 demonstrates the system's ability to detect material-specific responses to admixture additions.

These experiments demonstrate the complementary nature of the two measurement methods and their ability to distinguish between water-related and admixture-related property changes. The system proves effective across different material compositions, while the dual-parameter monitoring enables precise material control. The experiments particularly highlight the robustness of moisture measurements even during significant rheological changes induced by admixture additions.

### Example 6: Calibration and Control Zones

This example demonstrates the method of establishing and utilizing control zones for both moisture content and power consumption measurements. The proper functioning of the control system requires careful determination of baseline values and acceptable deviation ranges for both monitored parameters.

Figure 9 shows moisture sensor measurements for a 3BM7 ink composition. The graph displays three elements: the target moisture content (shown as "Target" line) and the upper and lower acceptable deviation limits (shown as "+2% water" and "-2% water" in dashed lines). The target range of the moisture content is between the deviation limits is marked as zone Z2. The zone above the upper deviation limit is marked as zone Z1. The zone below the lower deviation limit is marked as zone Z3.

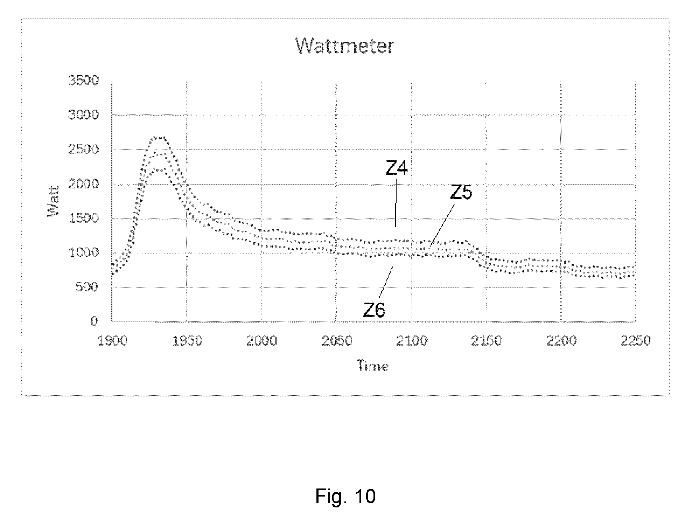

Figure 10 presents the corresponding wattmeter measurements for the same mixing operation. The graph shows power consumption readings with three curves: a target curve, an upper deviation limit and a lower deviation limit. The acceptable zone for power consumption extends to ±5% from the target value, providing a wider control range compared to moisture content. The target range of the power consumption is between the deviation limits is marked as zone Z5. The zone above the upper deviation limit is marked as zone Z4. The zone below the lower deviation limit is marked as zone Z6.

The establishment of these control zones requires a systematic calibration process for each ink formulation: First, the target moisture content is determined based on the required water-to-cement ratio and desired strength properties of the final product. This target value serves as the centerline for moisture control, with the ±2% tolerance band establishing strict limits for water content variation.

Second, for the same ink formulation, the baseline wattmeter reading is established using a reference batch exhibiting desired rheological properties. The wider ±5% tolerance band for power consumption acknowledges the greater natural variability in viscosity measurements while maintaining sufficient control for proper material performance. The combination of these two control zones creates a two-dimensional operating window within which the material properties are maintained.

### Example 7: Control Strategy Implementation

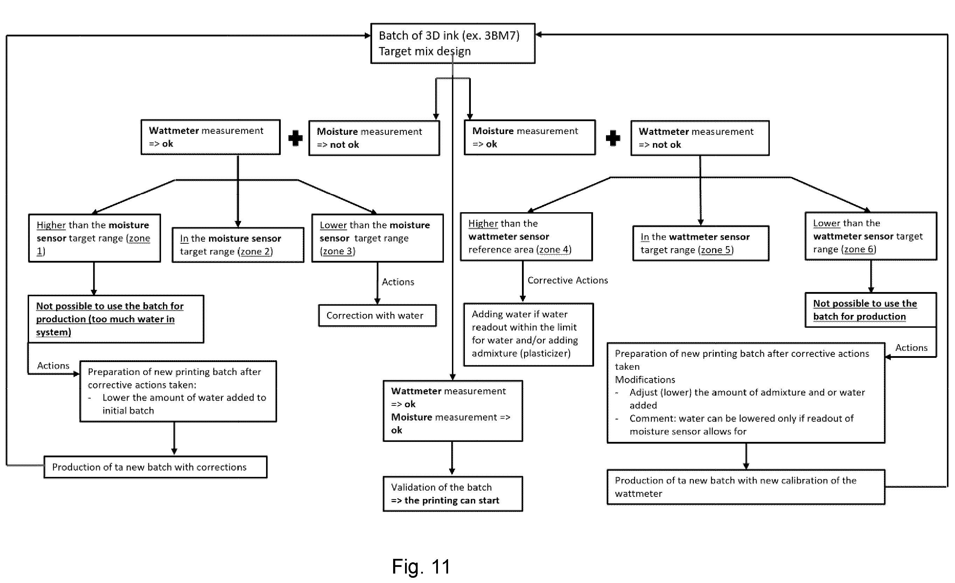

Figure 11 shows a flow chart illustrating the decision-making process for controlling material properties based on moisture sensor and wattmeter measurements. The chart demonstrates the systematic approach for a batch of 3D printing ink (exemplified with 3BM7 composition) with target mix design properties.

The decision process divides into two main branches based on the initial measurements. The left branch addresses scenarios where the wattmeter measurement is acceptable but moisture content deviates from target ranges, while the right branch handles cases where moisture content is acceptable but power consumption deviates from target ranges.

In the left branch, three zones are defined for moisture content, corresponding to the zones illustrated in Fig. 9: higher than target range (zone 1), within target range (zone 2), and lower than target range (zone 3). When moisture content is too high (zone 1), the batch cannot be used for production and must be replaced with a new batch using reduced water content. When moisture content is too low (zone 3), correction through water addition is permitted, followed by validation measurements.

In the right branch, three corresponding zones are defined for power consumption, corresponding to the zones illustrated in Fig. 10: higher than target range (zone 4), within target range (zone 5), and lower than target range (zone 6). When power consumption is in zone 4, the system permits adjustment through water and/or admixture addition, provided the moisture content remains within acceptable limits. If power consumption is too low (zone 6), the batch is rejected, and a new batch must be prepared with adjusted mixture proportions and recalibrated wattmeter settings.

The flow chart emphasizes the role of maintaining both parameters within their respective target ranges. Only when both measurements are satisfactory (wattmeter measurement "ok" and moisture measurement "ok") can the batch be validated and printing commence.

## Claims

1. A method for controlling properties of a flowable construction material, preferably during additive manufacturing, the method comprising:
establishing benchmark ranges comprising a target moisture content range and a target power consumption range for the flowable construction material having desired properties;
mixing aggregates, a hydraulic binder, water, and at least one admixture to form the flowable construction material;
monitoring, during mixing, a moisture content of the flowable construction material, preferably using a microwave moisture sensor (6);
monitoring, during mixing, a power consumption of a mixing device used for the mixing using a wattmeter (8);
comparing the monitored moisture content and power consumption to the respective benchmark ranges; and
adjusting, based on the comparing, an amount of at least one of water and admixture added to the flowable construction material to maintain the desired properties of the flowable construction material.

2. The method according to claim 1, wherein the adjusting is carried out such that both the monitored moisture content and the monitored power consumption are within their respective target ranges.

3. The method according to claim 1 or 2, wherein the mixing comprises:
mixing the aggregates and hydraulic binder to form a mixture;
adding about 95% of a target water amount to the mixture;
monitoring the moisture content and power consumption; and
adding a remaining portion of the water to obtain the target moisture content range and the target power consumption range.

4. The method according to claim 1, 2 or 3, wherein when the monitored moisture content is below its target range and the monitored power consumption is within its target range, the adjusting comprises adding an amount of water.

5. The method according to claim 1, 2 or 3, wherein when the monitored power consumption is above its target range and the monitored moisture content is within its target range, the adjusting comprises adding an amount of the at least one admixture and/or adding an amount of water.

6. The method according to any one of claims 1 to 5, wherein the mixing is performed for a duration of no more than 4 minutes.

7. The method according to any one of claims 1 to 6, further comprising monitoring the moisture content and power consumption continuously during the mixing.

8. The method according to any one of claims 1 to 7, wherein each of the target moisture content range and the target power consumption range comprises a target value and an acceptable deviation range around the target value.

9. The method according to claim 8, further comprising determining whether the monitored moisture content and power consumption fall within acceptable deviation ranges from the respective benchmark ranges, wherein the acceptable deviation range for moisture content preferably is ±2% and the acceptable deviation range for power consumption preferably is ±5%.

10. The method according to any one of claims 1 to 9, wherein the at least one admixture is a plasticizer.

11. The method according to any one of claims 1 to 10, wherein establishing the benchmark ranges comprises:
preparing a reference batch of the flowable construction material having the desired properties;
measuring a reference moisture content and a reference power consumption of the reference batch; and
determining the target ranges based on the measured reference moisture content and reference power consumption.

12. The method according to any one of claims 1 to 11, wherein the desired properties comprise at least one of a target viscosity, a target slump, a target compressive strength and a target water-to-cement ratio.

13. A system for additive manufacturing, the system comprising:
a mixing device (1) configured to mix aggregates, a hydraulic binder, water, and at least one admixture to form a flowable construction material;
a moisture sensor (6), preferably a microwave moisture sensor, arranged to monitor a moisture content of the flowable construction material during mixing;
a wattmeter (8) arranged to monitor power consumption of the mixing device (1) during mixing;
a control unit (9) configured to:
receive signals from the moisture sensor (6) and the wattmeter (8),
compare the monitored moisture content and power consumption to respective predetermined target ranges, and
generate control signals for adjusting an amount of at least one of water and admixture to be added to the flowable construction material based on the comparing; and
a dispensing system configured to add the water and/or admixture to the flowable construction material in response to the control signals from the control unit (9).

14. The system according to claim 13, further comprising:
at least one pump (12,16) configured to transport the water or admixture to the mixing device (1); and
at least one valve (14,18) controlled by the control unit to regulate addition of the water or admixture.

15. The system according to claim 13 or 14, further comprising a 3D printing head connected to receive the flowable construction material from the mixing device (1).

16. The system according to claim 13, 14 or 15, wherein the control unit (9) is configured to maintain both the monitored moisture content and the monitored power consumption within their respective predetermined target ranges.
